# EUROPÄISCHE PATENTSCHRIFT

(11) **EP 3 714 196 B1**
(45) Veröffentlichungstag und Bekanntmachung des Hinweises auf die Patenterteilung: **26.03.2025**
(21) Anmeldenummer: 18815545.1
(22) Anmeldetag: 26.11.2018
(51) Int. Cl.: F16L 37/14

(54) **STECKVERBINDERSYSTEM FÜR FLUIDLEITENDE BAUTEILE, INSBESONDERE VON FEUERLÖSCHSYSTEMEN**
PLUG-IN CONNECTION SYSTEM FOR FLUID-CONDUCTING COMPONENTS, IN PARTICULAR OF FIRE-EXTINGUISHING SYSTEMS
SYSTÈME DE CONNECTEUR À ENFICHAGE POUR ÉLÉMENTS STRUCTURAUX CONDUISANT UN FLUIDE, NOTAMMENT DE SYSTÈMES D'EXTINCTION D'INCENDIE

(30) Priorität: 24.11.2017 DE 102017127845
(43) Veröffentlichungstag der Anmeldung: 30.09.2020
(73) Patentinhaber: Minimax GmbH, 23843 Bad Oldesloe (DE)
(72) Erfinder: FELBERG, Jan, 23840 Bad Oldesloe (DE); HABITZL, Wolfgang, 23840 Bad Oldesloe (DE)
(74) Vertreter: Eisenführ Speiser
(86) Internationale Anmeldenummer: PCT/EP2018/082606
(87) Internationale Veröffentlichungsnummer: WO 2019/102014

(56) Entgegenhaltungen:
- WO-A1-2017/075305
- WO-A1-2017/137077
- DE-A1- 102009 053 696
- DE-A1- 3 519 773

## Beschreibung

Die vorliegende Erfindung betrifft ein Steckverbindersystem für fluidleitende Bauteile, insbesondere fluidleitende Bauteile von Feuerlöschsystemen, gemäß dem Oberbegriff von Anspruch 1.

Steckverbindersysteme der eingangs bezeichneten Art sind beispielsweise aus GB 652,986 zu dem Verwendungszweck bekannt, steife Rohrleitungen zum Transport von Flüssigkeiten miteinander zu verbinden.

Es ist hierbei, wie auch bei anderen insbesondere fluidleitenden Bauteilen während der Erstinstallation, aber auch später während der Wartung oder dem Austausch von defekten Bauteilen notwendig, die Verbindungsstellen zwischen ersten und zweiten Bauteilen zu lösen und wieder zu verbinden. Hierfür wird in der Praxis ein erheblicher Zeitbedarf benötigt. Verriegelungssysteme der eingangs bezeichneten Art leisten hier Abhilfe, indem sie durch das Einschieben des Sperrelements in den zwischen den Bauteilen gebildeten Sperrelementkanal eine sehr schnell zu installierende und vor allen Dingen auch mit geringem Zeitaufwand zu entfernende Verriegelungssicherung bereitstellen. Indem das Sperrelement im Sperrelementkanal sowohl in die Ausnehmung des ersten Bauteils als auch in die Ausnehmung des zweiten Bauteils eingreift, können die Bauteile so lange nicht voneinander abgesteckt werden, wie sich das Sperrelement im Sperrelementkanal befindet. Als Nachteil bei der aus dem Stand der Technik bekannten Verriegelungslösung wird aber angesehen, dass sich das Sperrelement ungewollt, beispielsweise infolge starker Vibrationen an den Bauteilen, selbsttätig lösen kann und im Extremfall aus dem Sperrelementkanal vollständig herausrutscht. Geschieht dies, können sich die ersten und zweiten Bauteile voneinander lösen und es kommt im schlimmsten Fall zum Funktionsausfall des die Bauteile aufweisenden Systems. In eingeschobenem Zustand ist bei den vorbekannten Systemen zudem nicht von außen erkennbar, ob die Sperrelement eine ausreichende Länge aufweist, oder eine zu geringe Länge aufweist. Letzteres kann beispielsweise der Fall sein, wenn das Sperrelement für eine kleinere Bauteil-Nennweite vorgesehen ist. In installiertem Zustand des Sperrelements bei gekoppelten Bauteilen wäre dann die vorgeschriebene hydraulische Druckfestigkeit der Verbindung nicht mehr gegeben.

WO 2017/075305 A1 betrifft ein Filtergehäuse, welches ein erstes Bauteil und ein zweites Bauteil aufweist. Ein Verriegelungsband ist dazu eingerichtet, beide Bauteile zueinander zu fixieren. Das Verriegelungsband kann durch Überwinden einer Schraubendruckfeder, die in eine Rastmulde am Verrieglungsband drückt, aus dem Kanal herausgezogen werden. Eine zweite Rastmulde stellt erneut einen Widerstand dar, der es dem Bediener erschwert, das Verriegelungsband vollständig aus dem Kanal herauszuziehen.

DE 10 2009 053 696 A1 oder WO 201/137077 A1 beziehen sich jeweils auf Anschlussvorrichtungen, jeweils aufweisend ein erstes Bauteil und ein zweites Bauteil, welche an korrespondierenden, konisch abgestuften Abschnitten ineinandersteckbar sind und mittels eines Sperrelements zumindest in axialer Richtung zueinander arretiert werden können.

Der Erfindung lag somit die Aufgabe zugrunde, ein Steckverbindersystem der eingangs bezeichneten Art vorzuschlagen, das die im Stand der Technik aufgefunden Nachteile möglichst weitgehend überwindet. Insbesondere lag der Erfindung die Aufgabe zugrunde, ein Steckverbindersystem anzugeben, welches die Bauteile mit höherer Zuverlässigkeit im verriegelten Zustand hält. Jedenfalls lag der Erfindung die Aufgabe zugrunde, ein alternatives Steckverbindersystem anzugeben.

Die Erfindung löst die ihr zugrundeliegende Aufgabe bei einem Steckverbindersystem der eingangs bezeichneten Art, mit den Merkmalen von Anspruch 1. Das Steckverbindersystem weist
- ein erstes Bauteil mit einer äußeren Umfangsfläche und einer ersten Ausnehmung in der äußeren Umfangsfläche,
- ein zweites Bauteil mit einer inneren Umfangsfläche und einer zweiten Ausnehmung in der inneren Umfangsfläche, wobei das erste und das zweite Bauteil derart ineinander steckbar sind, dass in vollständig ineinandergestecktem Zustand die Ausnehmungen einander gegenüberliegend angeordnet sind und einen Sperrelementkanal definieren,
- ein Sperrelement, das in vollständig ineinandergestecktem Zustand der Bauteile in den Sperrelementkanal bis zum Erreichen einer Verriegelungsstellung einschiebbar ist, und in beide Ausnehmungen in der Verriegelungsstellung wenigstens teilweise eingreift, und
- eine Sperrelementsicherung zur reversibel lösbaren Befestigung des Sperrelements am ersten und zweiten Bauteil auf. Die Erfindung folgt hierbei dem Ansatz, dass das Sperrelement seine Sperrfunktion nur dann verliert, wenn sie sich aus dem Sperrelementkanal entfernen kann. Das Vorsehen einer Sperrelementsicherung zum reversibel lösbaren Befestigen der Kette am ersten und zweiten Bauteil stellt sicher, dass ein selbsttätiges ungewolltes Lösen der Kette sorgfältig verhindert wird, wobei gleichzeitig die Sicherung mit geringem Zeitaufwand angebracht werden kann.

In einer bevorzugten Weiterbildung der Erfindung weist die Sperrelementsicherung eine Verliersicherung auf, die dazu eingerichtet ist, das Sperrelement an einem ungewollten vollständigen Verlassen des Sperrelementkanals zu hindern. Die Verliersicherung ist also nicht dazu vorgesehen, das Sperrelement an jeglicher Bewegung innerhalb des Sperrelementkanals zu hindern, sondern lediglich das vollständige Entfernen des Sperrelements vom ersten bzw. zweiten Bauteil zu unterbinden.

In einer bevorzugten Ausführungsform weist die Sperrelementsicherung ein endseitig an dem Sperrelement ausgebildetes, mit der Verliersicherung korrespondierendes Eingriffselement auf. Die Verliersicherung ist vorzugsweise zwischen einer Sperrposition und einer Freigabeposition hin- und herbewegbar an dem ersten oder zweiten Bauteil angeordnet. Die Verliersicherung ragt vorzugsweise in der Sperrposition zumindest soweit in den Sperrelementkanal hinein, dass das Eingriffselement des Sperrelements an einem Herausgleiten aus dem Sperrelementkanal gehindert wird.

Vorzugsweise weist die Verliersicherung hierzu einen auf den Sperrelementkanal zu bzw. vom Sperrelementkanal weg bewegbaren Obstruktionskörper auf, beispielsweise einen Stift, eine Schraube oder dergleichen. Maßgeblich ist die Eignung der Verliersicherung, eine partielle Obstruktion im Sperrelementkanal zu erzeugen, die das Sperrelement, bzw. zumindest das Eingriffselememt des Sperrelements, nicht passieren kann. Das Eingriffselement ist vorzugsweise als ein Gleitkörper ausgebildet, dessen Form an den Querschnitt des Sperrelementkanals angepasst ist, und der eine Ausnehmung zur Aufnahme des Obstruktionskörpers in dessen Obstruktionsstellung aufweist.

Besonders bevorzugt weist die Verliersicherung als Obstruktionskörper ein federbelastetes Sicherungselement auf, beispielsweise ein in das erste oder zweite Bauteil einschraubbares federndes Druckstück oder einen Blockierstift, wobei das Sicherungselement derart relativ zum Sperrelementkanal positioniert wird, dass es von der durch den Sperrelementkanal gleitenden Kette verdrängt werden kann, bei Eintreffen des Eingriffselements der Kette an der Verliersicherung allerdings in den Sperrelementkanal eindringt und mit dem Eingriffselement in Anlage gerät, um so als Endanschlag zu dienen. Je nach Geometrie des Eingriffselementes ist in bevorzugten Ausführungsformen ein Weiterbewegen der Kette nach Überwinden der Federvorspannung des Sicherungselements möglich. Hierbei wird aber nach wie vor ein ungewolltes Herausziehen der Kette zuverlässig verhindert.

In einer weiteren bevorzugten Ausführungsform ist in dem zweiten Bauteil ein Kanal-Endabschnitt ausgebildet, in welchen die zweite Ausnehmung mündet, so dass der Kanal-Endabschnitt Teil des Sperrelementkanals ist, wobei der Kanal-Endabschnitt zum Ein- und Ausführen der Kette in den Sperrelementkanal dimensioniert ist, vorzugsweise mit einer Spielpassung gegenüber dem Sperrelement. Die Verliersicherung ist vorzugsweise derart im Bereich des Kanal-Endabschnitts angeordnet, dass das Eingriffselement des Sperrelements, wenn es in Anlage mit der Verliersicherung steht, zumindest die erste Ausnehmung vollständig freigibt. In dieser Ausführungsform ist es nicht notwendig, das Sperrelement vollständig vom ersten bzw. zweiten Bauteil zu entfernen. Das Sperrelement kann in seiner Anschlagslage an der Verliersicherung verbleiben, und die ersten und zweiten Bauteile dennoch voneinander gelöst werden.

In einer bevorzugten Ausgestaltung ist der Kanal-Endabschnitt zu einer äußeren Umfangsfläche des zweiten Bauteils hin geöffnet. Somit tritt die Kette an der äußeren Umfangsfläche aus dem Steckverbindersystem aus und hierdurch ist der Sperrelementkanal zum Verriegeln des Steckverbindersystems stets leicht zugänglich.

Erfindungsgemäß weist die Sperrelementsicherung eine Sperrelementverriegelung auf, die dazu eingerichtet ist, das Sperrelement in der Verriegelungsstellung innerhalb des Sperrelementkanals reversibel lösbar zu fixieren. Hierdurch wird ein maßgeblicher Sicherheitsgewinn erreicht, da durch die Sperrelementverriegelung stets ein vollständiges Aufrechterhalten der Verriegelungsfunktion durch das Sperrelement im Sperrelementkanal gewährleistet bleibt, solange das Sperrelement in der Verriegelungsstellung fixiert ist.

Die Sperrelementverriegelung weist gemäß der Erfindung ein endseitig, insbesondere gegenüberliegend zu dem Eingriffselement der Verliersicherung, an dem Sperrelement aus-gebildetes Verriegelungselement auf. Ferner ist an dem ersten oder zweiten Bauteil erfindungsgemäß eine Verriegelungsaufnahme für das Verriegelungselement angeordnet. Die Verriegelungsaufnahme und das Verriegelungselement sind vorzugsweise zueinander korrespondierend derart geformt, und die Verriegelungsaufnahme ist dazu eingerichtet, dass das Verriegelungselement reversibel lösbar fixiert wird.

Die Verriegelungsaufnahme und das Verriegelungselement sind in der Verriegelungsposition in bevorzugten Ausführungsformen kraft- und/oder formschlüssig miteinander in Eingriff bringbar. Sie weisen dazu miteinander korrespondierend ausgebildete Vorsprünge und Ausnehmungen auf (für einen Formschluss) bzw. korrespondierend ausgebildete Angriffs- bzw. Eingriffsflächen (für einen Kraftschluss, etwa mittels Verschraubung). Vorzugsweise ist die Verriegelungsaufnahme schwenkbar an dem ersten oder zweiten Bauteil angebracht. Weiter vorzugsweise ist die Verriegelungsaufnahme dazu eingerichtet, an dem ersten oder zweiten Bauteil anzuliegen, wenn sie das Verriegelungselement kraft- und/oder formschlüssig hält.

Alternativ oder zusätzlich ist das Verriegelungselement schwenkbar an dem Sperrelement angebracht und vorzugsweise dazu eingerichtet, an dem ersten oder zweiten Bauteil anzuliegen, wenn sie das Verriegelungselement kraft- und/oder formschlüssig hält.

Die Verriegelungsaufnahme ist mittels einer Schraubverbindung mit dem Verriegelungselement des Sperrelements verbindbar, wenn das Sperrelement die Verriegelungsstellung einnimmt. Vorzugsweise sind das Verriegelungselement und die Verriegelungsaufnahme derart relativ zueinander positioniert, dass sie erst dann in Eingriff miteinander gelangen können, wenn das Sperrelement seine Verriegelungsstellung innerhalb des Sperrelementkanals erreicht hat.

In einer weiteren bevorzugten Ausführungsform weist die Sperrelementverriegelung ein Federelement auf, das mit dem Verriegelungselement oder der Verriegelungsaufnahme wirkverbunden und dazu eingerichtet ist, in der Verriegelungsposition eine von dem ersten bzw. zweiten Bauteil weg gerichtete Kraft auf das Verriegelungselement bzw. die Verriegelungsaufnahme auszuüben. Hierdurch wird im entriegelten Zustand aufgrund der Beabstandung des Verriegelungselements von der Aufnahme sofort für Wartungspersonal sichtbar gemacht, dass die Sperrelementsicherung noch unverriegelt ist. Es wird somit das Risiko vermindert, dass das ordnungsgemäße Verriegeln der Sperrelementsicherung fahrlässig unterbleibt.

Das Federelement ist in bevorzugten alternativen Ausgestaltungen an der Verriegelungsaufnahme oder dem Verriegelungselement befestigt und wird durch das Ineingriffbringen des Verriegelungselements mit der Verriegelungsaufnahme derart elastisch verformt, dass eine in Richtung einer Lösung des Verriegelungselements von der Aufnahme wirkende Rückstellkraft aufgebaut wird. Dies hat zum einen den vorteilhaften Effekt, dass nach dem Entriegeln das Verriegelungselement und die Aufnahme voneinander wegbewegt werden und das Verriegelungselement leichter durch den Bediener greifbar ist. Vorzugsweise weist das Verriegelungselement ein oder mehrere Griffmulden und/oder Vorsprünge zum händischen Angreifen auf.

Das Federelement der Sperrelementverriegelung ist vorzugsweise ein federbelastetes Sicherungselement, beispielsweise ein federbelastetes Druckstück (Kugelfeder) oder ein Blockierstift, oder eine Drehfeder, insbesondere Schenkelfeder.

Erfindungsgemäß weist die Verriegelungsaufnahme ein Passelement auf, das repräsentativ für die Nennweite des ersten und zweiten Bauteils ist, und das Verriegelungselement weist ein korrespondierend ausgebildetes Passelement auf, das für die Sperrelementlänge repräsentativ ist, die für die jeweilige Nennweite des ersten und zweiten Bauteils erforderlich ist. Die Passelemente sind dazu eingerichtet, in der Verriegelungsstellung des Sperrelements ineinanderzugreifen. Dies hat den Effekt, dass die Verriegelungsaufnahme und das Verriegelungselement nur dann miteinander verbunden werden können, wenn die "passenden" Passelemente vorhanden sind und ineinandergreifen. Es wird damit zuverlässig ausgeschlossen, dass ein zu kurzes Sperrelement unerkannt verwendet wird.

Gemäß einer weiteren Ausführungsform der Erfindung ist an dem ersten und zweiten Bauteil jeweils ein korrespondierendes Positionierelement zum eindeutigen Ausrichten der Bauteile zueinander ausgebildet.

Vorzugsweise ist an einem der beiden Bauteile, vorzugsweise an einem um das Bauteil drehbaren Ring, eine Ausnehmung ausgebildet, und an dem anderen der beiden Bauteile stirnseitig ein korrespondierender Vorsprung.

Weiter vorzugsweise sind die korrespondierenden Positionierelemente derart angeordnet, dass das erste und zweite Bauteil erst dann den vollständig ineinander gesteckten Zustand einnehmen können, wenn die Positionierelemente in einander greifen.

Besonders bevorzugt weist eines oder weisen beide der Positionierelemente eine oder mehrere Einführschrägen auf, die das Ineingriffbringen der Positionierelemente miteinander erleichtern.

Weiter vorzugsweise weisen die Positionierelemente umfangsseitig jeweils eine Markierung auf, wobei die Markierungen am ersten und zweiten Bauteil jeweils derart positioniert sind, dass sie in vollständig ineinandergestecktem Zustand der Bauteile fluchtend zueinander ausgerichtet sind. Hierdurch wird optisch gekennzeichnet, dass die Bauteile für ein Einschieben des Sperrelements korrekt positioniert sind, was dem Bediener die Installation abermals erleichtert.

Die Erfindung wurde vorstehend unter allgemeinem Verweis auf Bauteile für fluidleitende Systeme beschrieben. Solche Bauteile können jeweils ausgewählt sein aus der Liste:
- Rohrleitungen,
- Abschlusskappen, oder
- Armaturen, insbesondere Absperrorgane, fluidleitende Strömungselemente.

Das erste Bauteil wird hierbei jeweils als "männliches" Bauteil definiert, während das zweite Bauteil das entsprechende "weibliche" Bauteil ist. Das Steckverbindersystem weist also beispielsweise eine erste Rohrleitung mit einem männlichen Anschlussabschnitt und eine zweite Rohrleitung mit einem weiblichen Anschlussabschnitt auf, oder eine Armatur mit einem männlichen Anschlussabschnitt und einer Anschlusskappe mit einem weiblichen Anschlussabschnitt, oder einer Armatur mit einem weiblichen Anschlussabschnitt und eine Rohrleitung mit einem männlichen Anschlussabschnitt etc., wobei die männlichen Anschlussabschnitte jeweils die äußere Umfangsfläche aufweisen, und die weibliche Anschlussabschnitte die innere Umfangsfläche.

Unter Armaturen werden beispielsweise Absperrschieber, Schnellöffnungsventile, Düsen, Diffusoren, Sprinkler etc. verstanden.

Eine weitere bevorzugte Ausführungsform der Erfindung sieht vor, dass das Sperrelement als eine flexible Verriegelungskette ausgebildet ist, die mehrere, vorzugsweise schwenkbeweglich zueinander gelagerte, Kettenglieder aufweist. Die Schwenkbeweglichkeit ist vorzugsweise derart realisiert, dass die Kettenglieder um einachsig schwenkbar sind. Eine solche Kettenform liefert für die Erfindung einen optimalen Kompromiss zwischen Flexibilität einerseits, und Steifigkeit quer zur Schwenkachse andererseits, und damit einhergehender Stabilität. Alternativ zu einer Kettenform ist es auch möglich - und in bevorzugten Ausführungsformen vorgeschlagen - das Sperrelement als flexibles, aber druckstabiles Band, entweder glatt oder konturiert auszubilden. Maßgeblich sind die Fähigkeit des Sperrelements, der Krümmung des Sperrelementkanals im Inneren des Steckverbindersystems folgen zu können, und eine ausreichende Stabilität quer zur Krümmung des Sperrelementkanals, also in Längsrichtung der zu verbindenden Bauteile und somit in Kopplungs- bzw. Entkopplungsrichtung, um die Bauteile relativ zueinander formschlüssig zu fixieren.

Die Erfindung wurde vorstehend unter Bezugnahme auf das Steckverbindersystem als Ganzes beschrieben.

Vorliegend ist ein erstes fluidleitendes Bauteil für ein Steckverbindersystem nach einer der vorstehend beschriebenen bevorzugten Ausführungsformen beschrieben, insbesondere ein fluidleitendes Bauteil eines Feuerlöschsystems, mit einer äußeren Umfangsfläche und einer ersten Ausnehmung in der Umfangsfläche, wobei das erste Bauteil in ein zweites Bauteil, welches eine innere Umfangsfläche mit einer zweiten Ausnehmung in der inneren Umfangsfläche aufweist, derart einsteckbar ist, dass in vollständig ineinander gestecktem Zustand die ersten und zweiten Ausnehmen aneinander gegenüberliegend angeordnet sind und einen Sperrelementkanal definieren, und wobei die erste Ausnehmung dazu angepasst ist, in vollständig ineinandergestecktem Zustand der Bauteile wenigstens teilweise mit einem Sperrelement, das in den Sperrelementkanal bis zum Erreichen einer Verriegelungsstellung einschiebbar ist, wenigstens teilweise in Eingriff zu stehen, wobei das erste Bauteil wenigstens einen Teil einer Sperrelementsicherung zur reversibel lösbaren Befestigung des Sperrelements am ersten und/oder zweiten Bauteil aufweist.

Das erste fluidleitende Bauteil zeigt die gleichen Vorteile und weist die gleichen bevorzugten Ausführungsformen auf wie das erfindungsgemäße Steckverbindersystem, weswegen diesbezüglich auf die obigen Ausführungen verwiesen wird.

Vorliegend ist ferner ein zweites fluidleitendes Bauteil für ein Steckverbindersystem nach einer der vorstehend beschriebenen bevorzugten Ausführungsformen beschrieben, insbesondere in fluidleitendes Bauteil eines Feuerlöschsystems, mit einer inneren Umfangsfläche und einer zweiten Ausnehmung in der Umfangsfläche, wobei das zweite Bauteil auf ein erstes Bauteil, welches eine äußere Umfangsfläche mit einer ersten Ausnehmung in der äußeren Umfangsfläche aufweist, derart aufsteckbar ist, dass in vollständig ineinander gestecktem Zustand die ersten und zweiten Ausnehmungen einander gegenüberliegend angeordnet sind, und einen Sperrelementkanal definieren, und wobei die zweite Ausnehmung dazu angepasst ist, in vollständig ineinander gestecktem Zustand der Bauteile wenigstens teilweise mit einem Sperrelement, das in den Sperrelementkanal bis zum Erreichen einer Verriegelungsstellung einschiebbar ist, wenigstens teilweise in Eingriff zu stehen, wobei das zweite Bauteil wenigstens einen Teil einer Sperrelementsicherung reversibel lösbaren Befestigung des Sperrelements am ersten und/oder zweiten Bauteil aufweist.

Auch das zweite Bauteil weist die gleichen Vorteile und bevorzugten Ausführungsformen wie das erste Bauteil und das erfindungsgemäße Steckverbindungssystem auf, weswegen auch diesbezüglich auf die obigen Ausführungen verwiesen wird.

Zudem ist ein Sperrelement für ein Steckverbindersystem nach einer der vorstehend beschriebenen bevorzugten Ausführungsformen offenbart, mit mehreren schwenkbeweglich aneinander befestigten Sperrelementgliedern, wobei das Sperrelement dazu angepasst ist, in einen Sperrelementkanal eingeschoben zu werden, der von einer ersten Ausnehmung in einer äußeren Umfangsfläche eines ersten Bauteils des Steckverbindersystems und einer zweiten Ausnehmung in einer inneren Umfangsfläche eines zweiten Bauteils des Steckverbindersystems definiert wird, wenn das erste und das zweite Bauteil vollständig ineinandergesteckt sind, so dass die erste und zweite Ausnehmung einander gegenüberliegend angeordnet sind, und mit der ersten und zweiten Ausnehmung wenigstens teilweise in Eingriff zu stehen, wobei das Sperrelement dazu eingerichtet ist, mittels einer Sperrelementsicherung reversibel lösbar an dem ersten und/oder zweiten Bauteil befestigt zu werden.

Auch das Sperrelement weist dieselben Vorteile und bevorzugten Ausführungsformen wie vorstehenden beschriebenen ersten und zweiten Bauteile und das erfindungsgemäße Steckverbindersystem auf, weswegen auch diesbezüglich auf die obigen Ausführungen verwiesen wird.

Weiterhin ist ein Steckverbindersystem für fluidleitende Bauteile offenbart, insbesondere fluidleitende Bauteile von Feuerlöschsystemen, mit zwei ineinander steckbaren Bauteilen vor, die in eingestecktem Zustand zwischen sich einen Sperrelementkanal definieren, und mit einem biegsamen Sperrelement, das dem Sperrelementkanal angeordnet ist, und in beide Bauteile eingreift, um sie in axialer Richtung zueinander zu fixieren,
wobei das Steckverbindersystem eine Verliersicherung aufweist, die dazu eingerichtet ist, das Sperrelement an einem ungewollten vollständigen Verlassen des Sperrelementkanals zu hindern. Die vorstehend beschriebenen Vorteile und bevorzugten Ausführungsformen sind zugleich Vorteile und bevorzugte Ausführungsformen des Steckverbindersystems gemäß diesem Aspekt.

Ferner wird ein Steckverbindersystem für fluidleitende Bauteile offenbart, insbesondere fluidleitende Bauteile von Feuerlöschsystemen, mit zwei ineinander steckbaren Bauteilen vor, die in eingestecktem Zustand zwischen sich einen Sperrelementkanal definieren, und mit einem biegsamen Sperrelement, das dem Sperrelementkanal angeordnet ist, und in beide Bauteile eingreift, um sie in axialer Richtung zueinander zu fixieren, wobei die Verriegelung ein an dem Sperrelement ausgebildetes Verriegelungselement und eine an einem der Bauteile angeordnete Verriegelungsaufnahme für das Verriegelungselement aufweist, wobei die Verriegelung ferner ein Federelement aufweist, das mit dem Verriegelungselement oder der Verriegelungsaufnahme wirkverbunden und dazu eingerichtet ist, in der Verriegelungsposition eine von dem ersten oder zweiten Bauteil weg gerichtete Kraft auf das Verriegelungselement oder die Verriegelungsaufnahme auszuüben. Die vorstehend beschriebenen Vorteile und bevorzugten Ausführungsformen sind zugleich Vorteile und bevorzugte Ausführungsformen des Steckverbindersystems gemäß diesem Aspekt.

Weiterhin ist ein Steckverbindersystem für fluidleitende Bauteile offenbart, insbesondere fluidleitende Bauteile von Feuerlöschsystemen, mit zwei ineinander steckbaren Bauteilen vor, die in eingestecktem Zustand zwischen sich einen Sperrelementkanal definieren, und mit einem biegsamen Sperrelement, das dem Sperrelementkanal angeordnet ist, und in beide Bauteile eingreift, um sie in axialer Richtung zueinander zu fixieren, und mit einer Verriegelung, wobei die Verriegelung ein an dem Sperrelement ausgebildetes Verriegelungselement und eine an einem der Bauteile angeordnete Verriegelungsaufnahme für das Verriegelungselement aufweist, wobei die Verriegelung ferner ein Passelement aufweist, das repräsentativ für die Nennweite des ersten und zweiten Bauteils ist. Vorzugsweise weist das Verriegelungselement ein korrespondierend ausgebildetes Passelement auf, das für die Sperrelementlänge repräsentativ ist, die für die jeweilige Nennweite des ersten und zweiten Bauteils erforderlich ist. Besonders bevorzugt sind die Passelemente jeweils so positioniert, dass sie in der Verriegelungsstellung des Sperrelements ineinandergreifen können. Die vorstehend beschriebenen Vorteile und bevorzugten Ausführungsformen sind zugleich Vorteile und bevorzugte Ausführungsformen des Steckverbindersystems gemäß diesem Aspekt.

Außerdem ist ein Steckverbindersystem für fluidleitende Bauteile offenbart, insbesondere fluidleitende Bauteile von Feuerlöschsystemen, mit zwei ineinander steckbaren Bauteilen vor, die in eingestecktem Zustand zwischen sich einen Sperrelementkanal definieren, und mit einem biegsamen Sperrelement, das dem Sperrelementkanal angeordnet ist, und in beide Bauteile eingreift, um sie in axialer Richtung zueinander zu fixieren, wobei an dem ersten und zweiten Bauteil jeweils ein korrespondierendes Positionierelement zum eindeutigen Ausrichten der Bauteile zueinander ausgebildet ist, wobei die korrespondierenden Positionierelemente vorzugsweise derart angeordnet sind, dass das erste und zweite Bauteil erst dann den vollständig ineinandergesteckten Zustand einnehmen können, wenn die Positionierelemente ineinandergreifen, und wobei eines oder beide der Positionierelemente Einführschrägen aufweisen. Die vorstehend beschriebenen Vorteile und bevorzugten Ausführungsformen sind zugleich Vorteile und bevorzugte Ausführungsformen des Steckverbindersystems gemäß diesem Aspekt.

In einem weiteren Aspekt betrifft die Erfindung die Verwendung eines Steckverbindersystems zum Koppeln zweier Bauteile, insbesondere zum Koppeln zweier fluidleitender Bauteile eines Feuerlöschsystems. Die Erfindung löst bezüglich dieses Aspekts die eingangs genannte Aufgabe, indem sie die Verwendung eines Steckverbindersystems nach einer der vorstehend beschriebenen bevorzugten Ausführungsformen zu diesem Zwecke vorschlägt.

In einem weiteren Aspekt betrifft die Erfindung ein Verfahren zum Koppeln zweier Bauteile eines Steckverbindersystems, insbesondere zweier fluidleitender Bauteile eines Feuerlöschsystems. Die Erfindung löst die eingangs genannte Aufgabe bezüglich des erfindungsgemäßen Verfahrens, indem die Bauteile des Steckverbindersystems nach einer der vorstehend beschriebenen bevorzugten Ausführungsformen miteinander verbunden werden, und indem das Verfahren die Schritte umfasst:
- Ineinanderstecken des ersten Bauteils und des zweiten Bauteils derart, dass mittels gegenüberliegend voneinander angeordneter Ausnehmungen zwischen den beiden Bauteilen ein Sperrelementkanal definiert wird
- Einschieben eines Sperrelements in den Sperrelementkanal bis zum Erreichen einer Verriegelungsstellung, in der das Sperrelement beide Ausnehmungen zumindest teilweise eingreift, und
- reversibel lösbares Befestigen des Sperrelements an dem ersten Bauteil und dem zweiten Bauteil.

Das Verfahren wird vorzugsweise weitergebildet, indem das Sperrelement in eingeführtem Zustand an einem der Bauteile gegen Verlieren gesichert wird, insbesondere mittels Ineingriffbringens eines Eingriffselements mit einem Obstruktionskörper, der sich zumindest teilweise in den Sperrelementkanal hinein erstreckt.

Weiter vorzugsweise umfasst das Verfahren das reversibel lösbare Befestigen des Sperrelements in der Verriegelungsstellung innerhalb des Sperrelementkanals an dem jeweils anderen Bauteil, an dem nicht die Verliersicherung angebracht ist.

Erfindungsgemäß umfasst das reversibel lösbare Befestigen des Sperrelements an dem ersten und zweiten Bauteil das Ineingriffbringen korrespondierend ausgebildeter Passelemente, die derart relativ zueinander angeordnet sind, dass für die jeweilige Nennweite des ersten und zweiten Bauteils eine vorbestimmte Länge des Sperrelements in das Steckverbindersystem eingesetzt werden muss, um die Passelemente miteinander in Eingriff bringen zu können.

In einer weiteren bevorzugten Ausführungsform umfasst das Verfahren das Ineingriffbringen jeweils korrespondierender Positionierelemente, die an dem ersten und zweiten Bauteil zum eindeutigen Ausrichten der Bauteile zueinander ausgebildet sind, damit die Bauteile erst dann in den vollständig ineinandergesteckten Zustand einnehmen können, wenn die Positionierelemente ineinander eingreifen.

Die bevorzugten Ausführungsformen der erfindungsgemäßen Verwendung des erfindungsgemäßen Verfahrens sind zugleich bevorzugte Ausführungsformen der erfindungsgemäßen Vorrichtungen der weiter oben genannten erfindungsgemäßen Aspekte. Andersherum sind die bevorzugten Ausführungsformen des Steckverbindersystems der vorgenannten Aspekte zugleich bevorzugte Ausführungsformen der erfindungsgemäßen Verwendung und des erfindungsgemäßen Verfahrens.

Die Erfindung wird im Folgenden unter Bezugnahme auf die beigefügten Figuren anhand eines bevorzugten Ausführungsbeispiels näher beschrieben. Hierbei zeigen:
- Fig. 1: eine schematische Schnittdarstellung durch ein Steckverbindersystem gemäß einem bevorzugten Ausführungsbeispiel,
- Fig. 2: eine schematische räumliche Detailansicht des Steckverbindersystems gemäß Figur 1,
- Fig. 3: eine weitere schematische Schnittdarstellung eines Teils des Steckverbindersystems gemäß den Figuren 1 und 2,
- Fig. 4a - e: eine weitere schematische räumliche Ansicht eines Teils des Steckverbindersystems gemäß den Figuren 1 bis 3; und
- Fig. 5: eine schematische teilgeschnittene Seitenansicht des Steckverbindersystems gemäß den Figuren 1 bis 4e.

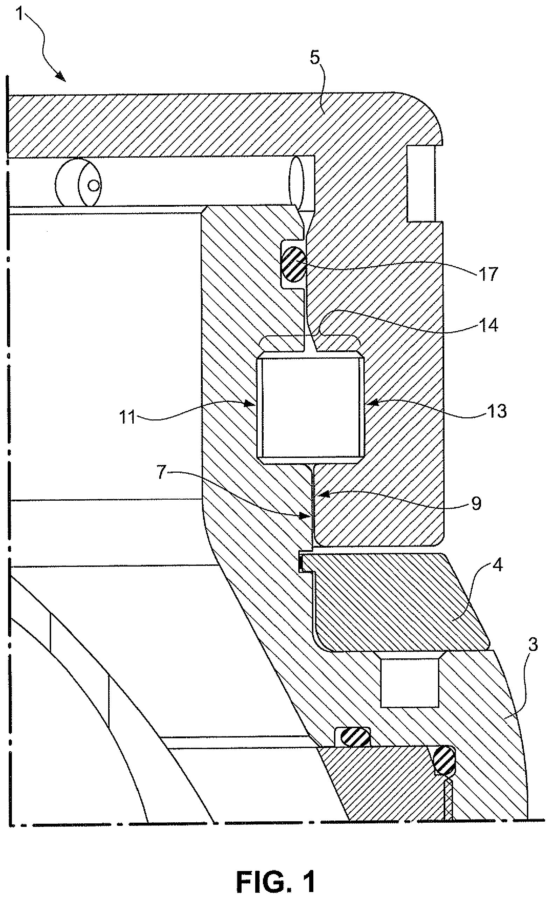

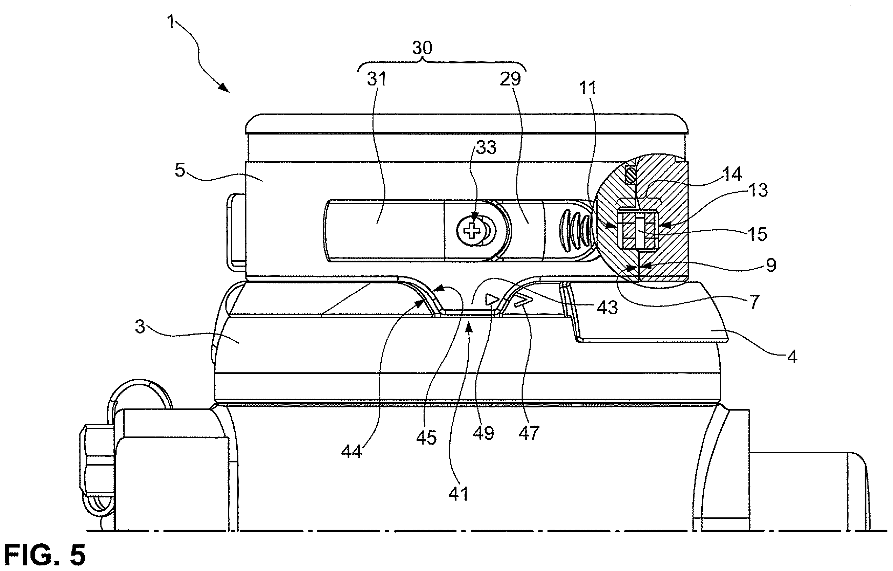

In Figur 1 ist eine partielle Querschnittsansicht eines Steckverbindersystems 1 für fluidleitende Bauteile gezeigt. Konkret ist in dem Ausführungsbeispiel ein erstes Bauteil 3 in Form eines Ventilkörpers gezeigt, das mit einem zweiten Bauteil 5 in Form einer Rückstoßverhinderungskappe verbunden ist. Das erste Bauteil 3, welches einen männlichen Anschlussabschnitt aufweist, weist in dem männlichen Anschlussabschnitt eine äußere Umfangsfläche 7 auf. Korrespondierend dazu weist das zweite Bauteil 5 einen weiblichen Anschlussabschnitt mit einer inneren Umfangsfläche 9 auf, die auf die äußere Umfangsfläche 7 des ersten Bauteils 3 aufgeschoben ist. An dem ersten Bauteil 3 ist vorzugsweise ein Ring 4 als Positionierhilfe drehbar angebracht, insbesondere aufgeklipst. Die Positionierung wird weiter unten anhand Figur 5 näher beschrieben.

Das erste Bauteil 3 weist in der äußeren Umfangsfläche 7 eine erste Ausnehmung 11 in Form einer Nut auf, die sich wenigstens teilweise entlang des Umfangs der äußeren Umfangsfläche 7 erstreckt. Entsprechend dazu weist das zweite Bauteil 5 an der inneren Umfangsfläche 9 eine zweite Ausnehmung 13, ebenfalls in Form einer Nut, auf, die sich wenigstens teilweise entlang des Umfangs der inneren Umfangsfläche 9 erstreckt. Das erste und das zweite Bauteil 3, 5 sind soweit ineinandergesteckt, dass sie eine in Figur 1 gezeigte Endlage erreicht haben, die den vollständig ineinandergesteckten Zustand darstellt. In diesem Zustand sind die ersten und zweiten Ausnehmungen 11, 13 unmittelbar einander gegenüberliegend angeordnet, so dass sie gemeinsam einen Sperrelementkanal 14 definieren, in dem ein Sperrelement 15 angeordnet ist. Der Sperrelementkanal 14 entspricht in seiner Form der Querschnittskontur des Sperrelements 15, vorzugsweise mit einer Spielpassung gegenüber dem Sperrelement 15. In dem gezeigten Ausführungsbeispiel ist das Sperrelement exemplarisch als Verriegelungskette dargestellt.

Dadurch, dass das Sperrelement 15 sowohl in die erste als auch in die zweite Ausnehmung 11, 13 eingreift, dient sie für jedes der Bauteile 3, 5 gegenüber dem jeweils Anderen als Widerhaken und verhindert ein Auseinanderziehen des ersten und zweiten Bauteils 3,5.

Ein Dichtelement 17 ist zwischen der inneren und äußeren Umfangsfläche 7,9 des ersten und zweiten Bauteils 3, 5 angeordnet und dichtet die Flächen 7, 9 gegen Fluidübertritt ab.

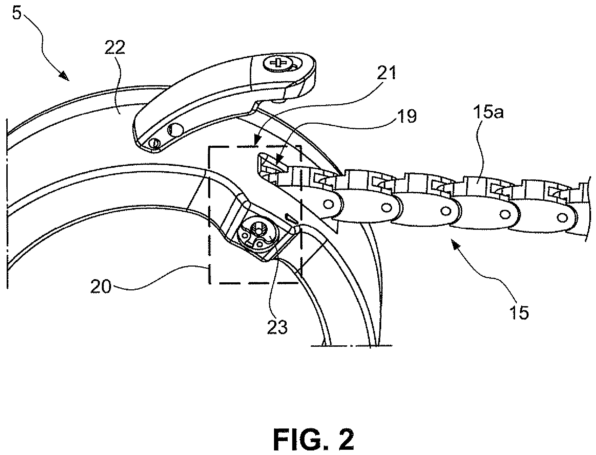

Die erfindungsgemäße Sperrelementsicherung wird anhand der Figuren 2 bis 4e näher erläutert.

Figur 2 zeigt einen ersten Bestandteil einer Sperrelementsicherung 20: Das zweite Bauteil weist einen Kanal-Endabschnitt 21 auf, in dem das Sperrelement 15 aus dem Sperrelementkanal 15 (Figur 1) entlang aus dem zweiten Bauteil 5 herausgeführt beziehungsweise eingeführt wird. Das Sperrelement 15 weist mehrere schwenkbeweglich zueinander angeordnete Sperrelementglieder 15a auf, die innerhalb des Sperrelementkanals 14 dem gekrümmten Verlauf des Sperrelementkanals 14 folgen können.

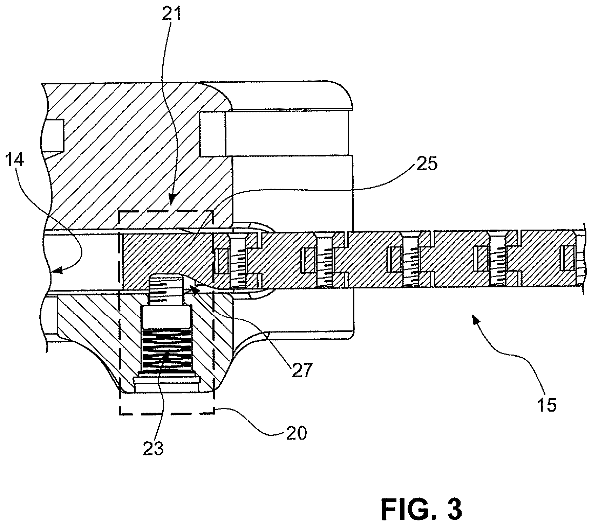

Der Kanal-Endabschnitt 21 mündet an einer äußeren Umfangsfläche 22 des zweiten Bauteils 5 in eine Öffnung 19, die an die Größe des Sperrelements 15 angepasst ist. In dem Endabschnitt 21 ist eine Verliersicherung 23 mit einem federbelasteten Sicherungselement derart positioniert, dass sie das Sperrelement 15 gegen ungewolltes Verlassen des Sperrelementkanals 14 (Figur 1) sichert. Der strukturelle Aufbau ergibt sich insbesondere aus Figur 3.

Die in dem Kanal-Endabschnitt 21 positionierte Verliersicherung 23 ist so positioniert, dass sie sich in einer Sperrposition in den Sperrelementkanal 14 hinein erstreckt. Das Sperrelement 15 weist endseitig ein mit der Verliersicherung 23 korrespondierendes Eingriffselement 25 auf. An dem Eingriffselement 25 sind ein oder mehrere Ausnehmungen 27 ausgebildet, in welche die Verliersicherung 23 in der Sperrposition eingreift. Ein Weiterbewegen an der Verliersicherung 23 vorbei ist abhängig von der geometrischen Auslegung zerstörungsfrei unmöglich. Die Ausnehmungen 27 sind in Richtung des Sperrelements 15 mit Gleitschrägen versehen, die es mit vergleichsweise geringem Kraftaufwand ermöglichen, das Sperrelement 15 in den Sperrelementkanal 14 hineinzuschieben und dabei den Kopf der Verliersicherung 23 aus dem Sperrelementkanal 14 heraus zu verdrängen.

Die Verliersicherung 23 stellt ein erstes Funktionselement der Sperrelementsicherung 20 dar. Vorzugsweise ist alternativ oder zusätzlich ein zweites Funktionselement vorgesehen, nämlich eine Sperrelementverriegelung 30.

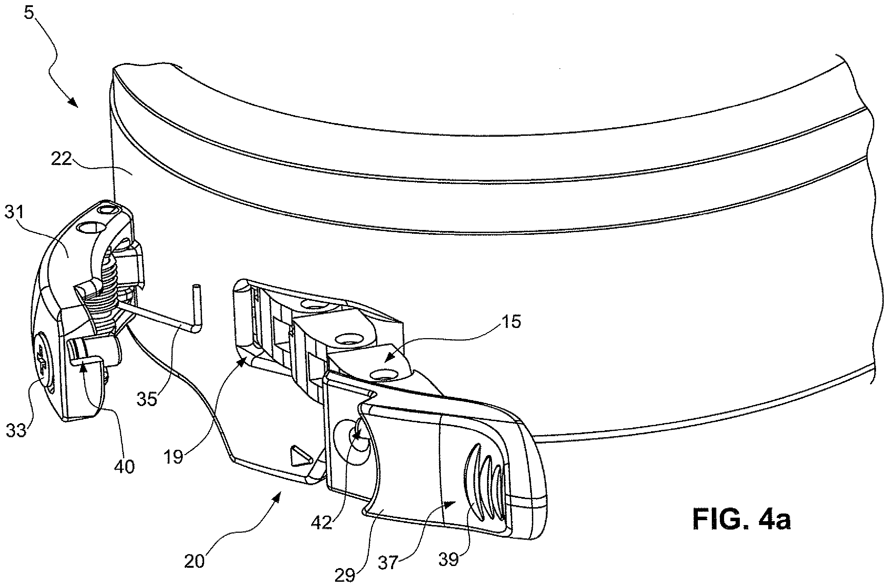

In Figur 4a ist die Sperrelementverriegelung (Bezugszeichen 30 in Fig. 5) exemplarisch gezeigt. Die Sperrelementverriegelung ist dazu eingerichtet, das Sperrelement 15 in ihrer Verriegelungsstellung innerhalb des Sperrelementkanals 14 reversibel lösbar zu fixieren und weist hierzu ein endseitig gegenüberliegend dem Eingriffselement 25 für die Verliersicherung 23 an dem Sperrelement 15 schwenkbar angeordnetes Verriegelungselement 29 auf. Das Verriegelungselement 29 ist dazu eingerichtet, mit einer korrespondierenden Verriegelungsaufnahme 31 am zweiten Bauteil 5 in Eingriff gebracht zu werden, um das Sperrelement 15 zu fixieren. Im vorliegenden Ausführungsbeispiel ist die Aufnahme 31 als Schwenkhebel ausgebildet, und das Verriegelungselement 29 ist mit der Verriegelungsaufnahme 31 formschlüssig sowie mittels einer Sicherungsschraube 33 kraftschlüssig in einer Verriegelungsposition an dem zweiten Bauteil 5 befestigbar. In Figur 4a ist das Verriegelungselement 29 in einer Freigabeposition dargestellt, in der es zu dem zweiten Bauteil 5 bereits beabstandet ist. Die Verriegelungsaufnahme 31 wird mittels eines Federelements 35 von der Umfangsfläche 22 des zweiten Bauteils 5 weggedrückt, sobald die Verriegelungsaufnahme 31 und das Verriegelungselement 29 voneinander gelöst werden. Das Federelement 35 ist vorzugsweise als Schenkelfeder ausgebildet und wird beim Anlegen des Verriegelungselements 29 und der Aufnahme 31 aneinander elastisch verformt, derart, dass die Rückstellkraft ein Abdrücken des Verriegelungselements 29 bewirkt. Wenn die Verriegelungsaufnahme 31 wie in Figur 4a gezeigt von der Umfangsfläche 22 des zweiten Bauteils 5 absteht, ist sofort erkennbar, dass sich das Sperrelement 15 entweder nicht in Verriegelungsstellung befindet, oder jedenfalls das Verriegelungselement 29 nicht mit der Verriegelungsaufnahme 31 verbunden ist.

Das Verriegelungselement 29 weist eine endseitig, vorzugsweise von der Verriegelungsaufnahme 31 fortweisende, Griffmulde 37 auf. Die Griffmulde 37 weist vorzugsweise ferner einen oder mehrere Vorsprünge 39 auf. Der eine bzw. die mehreren Vorsprünge 39 sind dazu eingerichtet, einem Bediener eine haptische Erleichterung beim Greifen des Verriegelungselements 29 zum Einschieben oder Herausziehen des Sperrelement 15 bereitzustellen.

Um ein versehentliches Einlegen eines falschen, insbesondere zu kurzen Sperrelements 15 zu verhindern, sind an der Verriegelungsaufnahme 31 und dem Verriegelungselement 29 korrespondierend ausgebildete Passelemente 40, 42 ausgebildet. Im vorliegenden Ausführungsbeispiel ist an der Verriegelungsaufnahme 31 ein Passelement 40 in Form einer Ausnehmung ausgebildet. An dem Verriegelungselement 29 ist ein Passelement 42 in Form eines Vorsprungs, beispielsweise eines Stifts, ausgebildet. Das Passelement 42 gleitet beim Annähern zwischen Verriegelungsaufnahme 31 und Verriegelungselement 29 in das korrespondierende Passelement 40 hinein. Lassen sich die Verriegelungsaufnahme 31 und das Verriegelungselement 29 vollständig aneinander anlegen und beide in Anlage mit der Umfangsfläche 22 des zweiten Bauteils 5 bringen, weiß der Bediener hierdurch automatisch, dass er das richtige Sperrelement 15 ausgewählt hat. Bei einem Sperrelement 15 einer anderen Länge, also für eine andere Nennbauweite des zweiten Bauteils 5, wäre das Passelement 42 an anderer Stelle oder mit anderer Form ausgebildet, so dass sich die Passelemente dann nicht miteinander in Eingriff bringen lassen würden. Hierdurch wird eine Fehlbestückung mit einer falschen Sperrelement 15 zuverlässig vermieden.

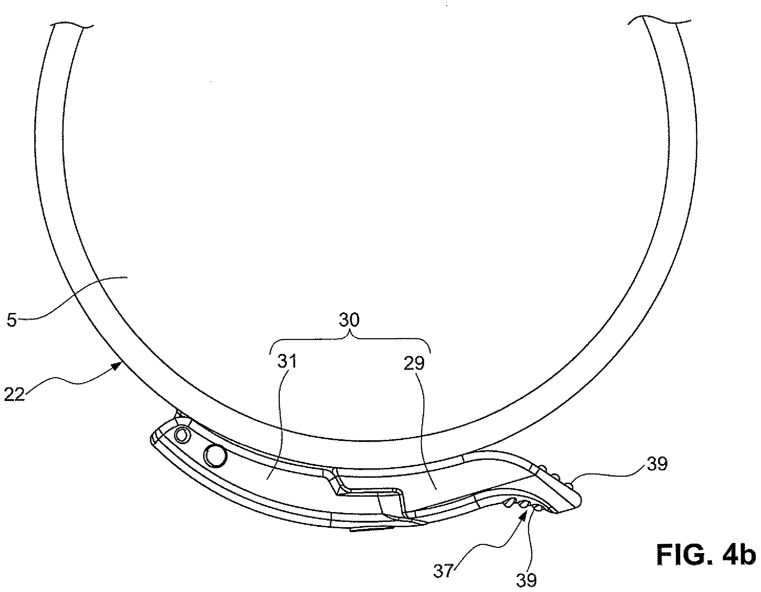

In den Figuren 4b-e wird exemplarisch die Funktionsweise der Sperrelementverriegelung erläutert.

In Figur 4b ist das zweite Bauteil 5 gezeigt, während das (nicht dargestellte) Sperrelement 15 sich in ihrer Verriegelungsstellung befindet, und die Sperrelementverriegelung 30 ebenfalls ihren Verriegelungszustand einnimmt. In diesem Zustand liegen sowohl das Verriegelungselement 29 als auch die Verriegelungsaufnahme 31 an der äußeren Umfangsfläche 22 des zweiten Bauteils an, und die Sicherungsschraube 33 hält die Verriegelung 30 reversibel lösbar zusammen.

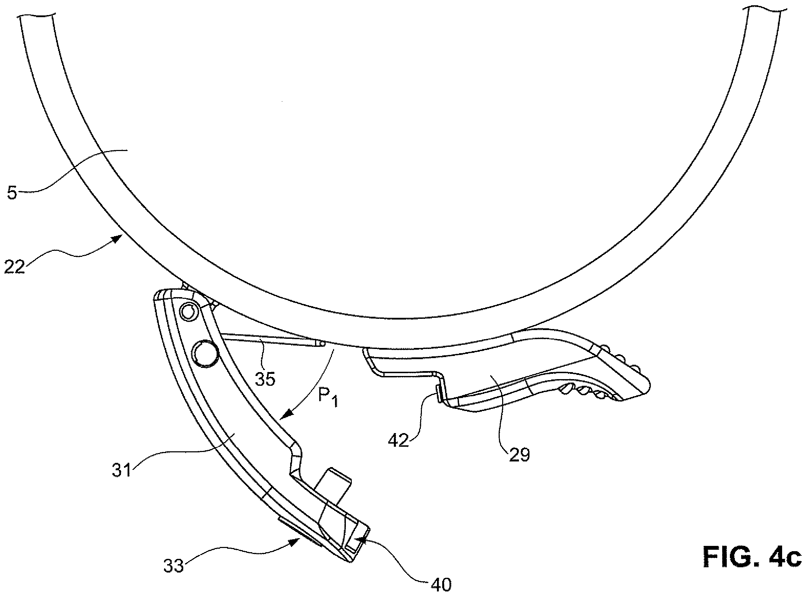

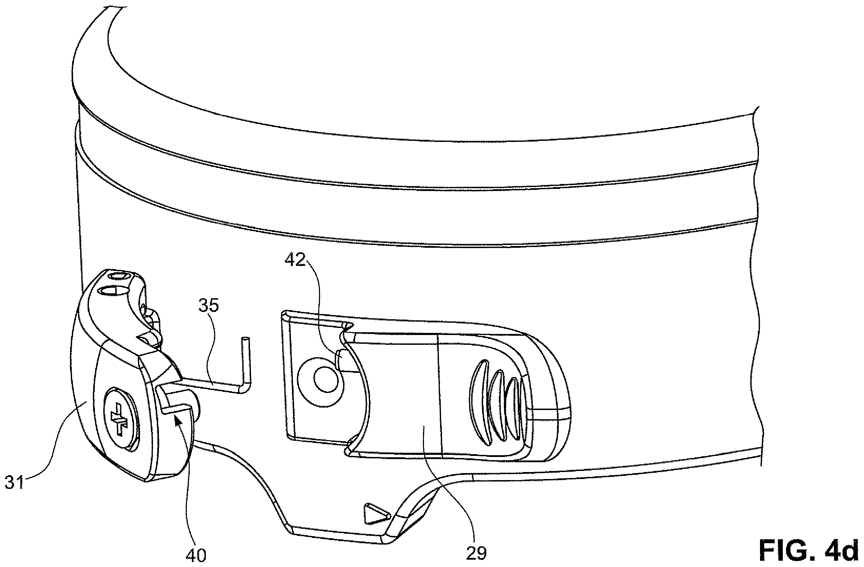

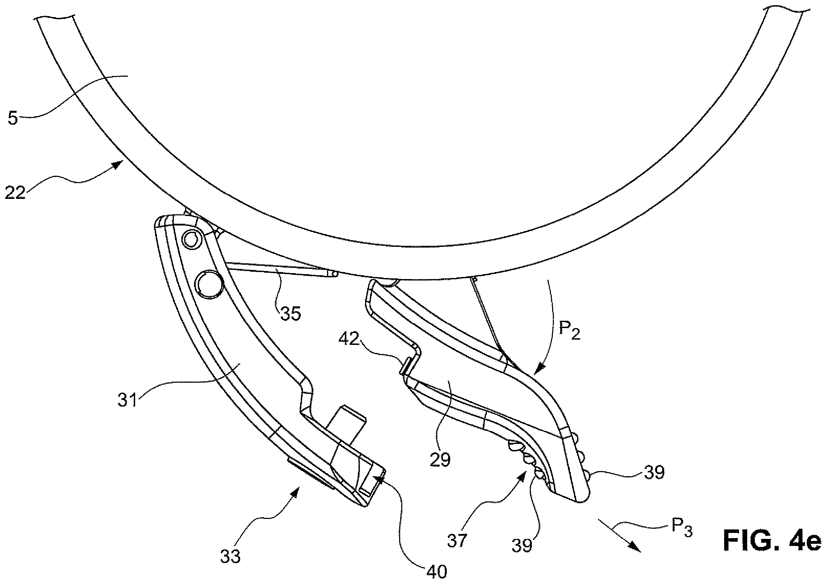

Wird nun die kraft- und formschlüssige Verbindung zwischen dem Verriegelungselement 29 und der Verriegelungsaufnahme 31 durch Lösen der Sicherungsschraube 33 aufgehoben, stellt sich der Zustand gemäß den Figuren 4c,d ein. Die Verriegelungsaufnahme 31 wird durch das Federelement 35 in Richtung des Pfeils P₁ von der Umfangsfläche 22 des zweiten Bauteils 5 fortgeschwenkt und steht nach außen ab. Die Passelemente 40,42 sind auseinandergeglitten. In dieser Stellung wird es nun möglich, dass Verriegelungselement 29 in Richtung des Pfeils P₂ (Figur 4e) von der Umfangsfläche 22 abzuschwenken, so dass sich der in Figur 4e gezeigte Zustand einstellt. Durch Angreifen an der Griffmulde 37 und den Vorsprüngen 39 ist es dann für den Bediener leicht, dass Verriegelungselement 29 und mit ihm das Sperrelement 15 in Richtung des Pfeils P₃ von dem zweiten Bauteil 5 abzuziehen, so dass sich der Zustand gemäß Figur 4a einstellt. Das Einschieben des Sperrelements vollzieht sich im Wesentlichen in gleicher Weise, allerdings in umgekehrter Reihenfolge.

In Figur 5 ist schließlich ein weiterer Montageaspekt gemäß der Erfindung gezeigt. Hinsichtlich des in Figur 5 rechts teilweise geschnittenen Bereichs wird auf Figur 1 verwiesen.

Das Steckverbindersystem weist zur erleichterten Montage des ersten Bauteils 3 und des zweiten Bauteils 5 aneinander korrespondierend ausgebildete Positionierelemente auf. Dies umfassen ein erstes Positionierelement 41, welches als Ausnehmung stirnseitig am ersten Bauteil 3 vorgesehen ist. Vorzugsweise ist das Positionierelement 41 an einem um das erste Bauteil 3 herum drehbaren Ring 4 ausgebildet. Hierdurch kann ein Monteur den Schnellverschluss jederzeit in eine für ihn gut erreichbare Position drehen. Weiter vorzugsweise ist der Ring 4 auf das erste Bauteil 3 aufgeklipst. Ferner weist das zweite Bauteil ein zu der Ausnehmung 41 passend dimensioniertes zweites Positionierelement 43 in Form eines Vorsprungs auf. An dem Ring 4 sind seitlich an dem Positionierelement 41 jeweils Einführschrägen 44 ausgebildet, und an dem Positionierelement 43 des zweiten Bauteils sind ebenfalls Einführschrägen 45 ausgebildet, die ein Eingreifen der Positionierelemente 41, 43 ineinander erleichtern. Mittels des Rings 4 wird eine haptische Unterstützung bereitgestellt, die es dem Monteur erleichtert, zu erkennen, ob die Bauteile 3, 5 vollständig ineinandergesteckt sind, damit eine Verriegelung erfolgen kann.

Als optische Unterstützung ist an dem ersten Bauteil 3, insbesondere an dem Ring 4, ferner eine erste Markierung 47 angeordnet, sowie eine zweite Markierung 49 an dem zweiten Bauteil 5. Wenn die Markierungen 47, 49 fluchtend zueinander ausgerichtet sind, wie in dem in Figur 5 gezeigten Zustand, ist optisch für den Bediener erkennbar, dass die Bauteile 3,5 vollständig ineinandergesteckt sind, und eine Montage des Sperrelements 15 erfolgen kann.

### Bezugszeichenliste

- 1: Steckverbindersystem
- 3: erstes Bauteil
- 4: Ring
- 5: zweites Bauteil
- 7: äußere Umfangsfläche
- 9: innere Umfangsfläche
- 11: erste Ausnehmung
- 13: zweite Ausnehmung
- 14: Sperrelementkanal
- 15: Sperrelement
- 15a: Sperrelementglied
- 17: Dichtelement
- 19: Öffnung
- 20: Sperrelementsicherung
- 21: Kanal-Endabschnitt
- 23: Verliersicherung
- 25: Eingriffselement für Verliersicherung
- 27: Ausnehmung, Eingriffselement
- 29: Verriegelungselement
- 30: Sperrelementverriegelung
- 31: Verriegelungsaufnahme, Sperrelementverriegelung
- 33: Sicherungsschraube
- 35: Federelement, Sperrelementverriegelung
- 37: Griffmulde
- 39: Vorsprung
- 40, 42: Passelemente
- 41: Positionierelement, erstes Bauteil
- 43: Positionierelement, zweites Bauteil
- 44: Einführschräge, erstes Bauteil
- 45: Einführschräge, zweites Bauteil
- 47: Markierung, erstes Bauteil
- 49: Markierung, zweites Bauteil

## Patentansprüche

1. Steckverbindersystem (1) für fluidleitende Bauteile von Feuerlöschsystemen, mit
- einem ersten Bauteil (3) mit einer äußeren Umfangsfläche (7) und einer ersten Ausnehmung (11) in der Umfangsfläche (7),
- einem zweiten Bauteil (5) mit einer inneren Umfangsfläche (9) und einer zweiten Ausnehmung (13) in der inneren Umfangsfläche (9), wobei
das erste und das zweite Bauteil (3, 5) derart ineinander steckbar sind, dass in vollständig ineinandergestecktem Zustand die Ausnehmungen (11,13) einander gegenüberliegend angeordnet sind und einen Sperrelementkanal (14) definieren, und mit
einem Sperrelement (15), das in vollständig ineinandergestecktem Zustand der Bauteile (3, 5) in den Sperrelementkanal (14) bis zum Erreichen einer Verriegelungsstellung einschiebbar ist, und in beide Ausnehmungen (11,13) in der Verriegelungsstellung wenigstens teilweise eingreift,
wobei das Steckverbindersystem eine Sperrelementsicherung (20) zur reversibel lösbaren Befestigung des Sperrelements (15) am ersten und/oder zweiten Bauteil (3, 5) aufweist,
wobei die Sperrelementsicherung (20) eine Sperrelementverriegelung (30) aufweist, die dazu eingerichtet ist, das Sperrelement (15) in der Verriegelungsstellung innerhalb des Sperrelementkanals (14) reversibel lösbar zu fixieren,
**dadurch gekennzeichnet, dass** die Sperrelementverriegelung (30) ein endseitig an dem Sperrelement (15) ausgebildetes Verriegelungselement (29) und eine Schraubverbindung (33) aufweist,
wobei an dem ersten oder zweiten Bauteil (3, 5) eine Verriegelungsaufnahme (31) für das Verriegelungselement (29) angeordnet ist,
wobei die Verriegelungsaufnahme (31) mittels der Schraubverbindung (33) mit dem Verriegelungselement (29) des Sperrelements (15) verbindbar ist, wenn das Sperrelement (15) die Verriegelungsstellung einnimmt, und
wobei die Verriegelungsaufnahme (31) ferner ein Passelement (40) aufweist, das repräsentativ für die Nennweite des ersten und zweiten Bauteils (3,5) ist, und das Verriegelungselement (29) ein korrespondierend ausgebildetes Passelement (42) aufweist, das für die Sperrelementlänge repräsentativ ist, die für die jeweilige Nennweite des ersten und zweiten Bauteils (3,5) erforderlich ist, wobei die Passelemente (40, 42) jeweils so positioniert sind, dass sie in der Verriegelungsstellung des Sperrelements (15) ineinandergreifen können.

2. Steckverbindersystem (1) nach Anspruch 1,
wobei die Sperrelementsicherung (20) eine Verliersicherung (23) aufweist, die dazu eingerichtet ist, das Sperrelement (15) an einem ungewollten vollständigen Verlassen des Sperrelementkanals zu hindern,
wobei die Sperrelementsicherung (20) vorzugsweise ein endseitig an dem Sperrelement (15) ausgebildetes, mit der Verliersicherung (23) korrespondierendes Eingriffselement (25) aufweist,
wobei die Verliersicherung (23) vorzugsweise zwischen einer Sperrposition und einer Freigabeposition hin- und herbewegbar an dem ersten oder zweiten Bauteil (3, 5) angeordnet ist.

3. Steckverbindersystem nach Anspruch 2,
wobei die Verliersicherung (23) in der Sperrposition zumindest so weit in den Sperrelementkanal (14) hineinragt, dass das Eingriffselement (25) des Sperrelements (15) an einem Herausgleiten aus dem Sperrelementkanal (14) gehindert wird.

4. Steckverbindersystem (1) nach Anspruch 2 oder 3,
wobei in dem zweiten Bauteil ein Kanal-Endabschnitt (21) ausgebildet ist, in welchen die zweite Ausnehmung mündet, so dass der Kanal-Endabschnitt (21) Teil des Sperrelementkanals (14) ist, und der zum Ein- und Ausführen des Sperrelements (15) in den Sperrelementkanal (14) dimensioniert ist, wobei vorzugsweise die Verliersicherung (23) derart im Bereich des Kanal-Endabschnitts (21) angeordnet ist, dass das Eingriffselement (25) des Sperrelements (15), wenn es in Anlage mit der Verliersicherung (23) steht, zumindest die erste Ausnehmung (11) vollständig freigibt, und/oder
wobei vorzugsweise der Kanal-Endabschnitt (21) zu einer äußeren Umfangsfläche (22) des zweiten Bauteils (5) hin geöffnet ist.

5. Steckverbindersystem (1) nach einem der vorstehenden Ansprüche,
wobei das Verriegelungselement (29) gegenüberliegend zu dem Eingriffselement (25) der Verliersicherung (23) an dem Sperrelement (15) ausgebildet ist.

6. Steckverbindersystem nach einem der Ansprüche 1 bis 5,
wobei die Verriegelungsaufnahme (31) und das Verriegelungselement (29) vorzugsweise zueinander korrespondierend geformt sind, und
die Verriegelungsaufnahme (31) dazu eingerichtet ist, das Verriegelungselement (29) reversibel lösbar zu fixieren.

7. Steckverbindersystem (1) nach einem der Ansprüche 1 bis 6,
wobei die Sperrelementverriegelung (30) ein Federelement (35) aufweist, das mit dem Verriegelungselement (29) oder der Verriegelungsaufnahme (31) wirkverbunden und dazu eingerichtet ist, in der Verriegelungsposition eine von dem ersten oder zweiten Bauteil (3,5) weg gerichtete Kraft auf das Verriegelungselement (29) oder die Verriegelungsaufnahme (31) auszuüben.

8. Steckverbindersystem (1) nach einem der vorstehenden Ansprüche,
wobei an dem ersten und zweiten Bauteil (3, 5) jeweils ein korrespondierendes Positionierelement (41,43) zum eindeutigen Ausrichten der Bauteile zueinander ausgebildet ist,
wobei vorzugsweise an einem der beiden Bauteile (3) stirnseitig eine Ausnehmung (41) ausgebildet ist, vorzugsweise an einem um das Bauteil (3) herum drehbaren Ring (4), und an dem anderen der beiden Bauteile (5) stirnseitig ein korrespondierender Vorsprung (43) vorgesehen ist.

9. Steckverbindersystem (1) nach Anspruch 8,
wobei die korrespondierenden Positionierelemente (41, 43) derart angeordnet sind, dass das erste und zweite Bauteil (3, 5) erst dann den vollständig ineinandergesteckten Zustand einnehmen können, wenn die Positionierelemente (41, 43) ineinandergreifen.

10. Steckverbindersystem (1) nach einem der Ansprüche 8 oder 9,
wobei eines oder beide der Positionierelemente (41, 43) Einführschrägen (44, 45) aufweisen.

11. Verwendung eines Steckverbindersystems nach einem der vorstehenden Ansprüche, zum Koppeln zweier Bauteile (3,5), insbesondere zweier fluidleitender Bauteile (3,5) eines Feuerlöschsystems.

12. Verfahren zum Koppeln zweier Bauteile (3,5) eines Steckverbindersystems (1) nach einem der Ansprüche 1 bis 10, insbesondere zweier fluidleitender Bauteile (3,5) eines Feuerlöschsystems, umfassend die Schritte:
- Ineinanderstecken des ersten Bauteils (3) und des zweiten Bauteils (5) derart, dass mittels gegenüberliegend voneinander angeordneter Ausnehmungen (11, 13) zwischen den beiden Bauteilen (3, 5) ein Sperrelementkanal (14) definiert wird,
- Einschieben eines Sperrelements (15) in den Sperrelementkanal (14) bis zum Erreichen einer Verriegelungsstellung, in der das Sperrelement (15) in beide Ausnehmungen (11, 13) zumindest teilweise eingreift, und
- reversibel lösbares Befestigen des Sperrelements (15) an dem ersten Bauteil (3) und dem zweiten Bauteil (5), wobei das lösbare Befestigen des Sperrelements (15) das Ineingriffbringen korrespondierend ausgebildeter Passelemente (40, 42) umfasst, die derart relativ zueinander angeordnet sind, dass für die jeweilige Nennweite des ersten und zweiten Bauteils (3, 5) eine vorbestimmte Länge des Sperrelements (15) in das Steckverbindersystem (1) eingesetzt werden muss, um die Passelemente (40, 42) miteinander in Eingriff bringen zu können.

## Claims

1. A plug-in connection system (1) for fluid-conducting components of fire extinguishing systems, comprising
- a first component (3) having an outer peripheral surface (7) and a first recess (11) in the peripheral surface (7),
- a second component (5) having an inner peripheral surface (9) and a second recess (13) in the inner peripheral surface (9), wherein
the first and the second component (3, 5) can be plugged into one another such that when they are fully plugged into one another the recesses (11,13) lie opposite one another and define a locking element channel (14), and
a locking element (15) which, when the components (3, 5) are fully plugged into one another, can be inserted into the locking element channel (14) until an interlock position is reached and at least part of which engages in both recesses (11,13) in the interlock position,
wherein the plug-in connection system has a locking element safety device (20) for reversibly releasably securing the locking element (15) on the first and/or second component (3, 5),
wherein the locking element safety device (20) has a locking element interlock mechanism (30) which is designed to reversibly and releasably secure the locking element (15) in the interlock position inside the locking element channel (14),
**characterized in that** the locking element interlock mechanism (30) has an interlock element (29) formed at the end of the locking element (15) and a screw connection (33),
wherein an interlock receiver (31) for the interlock element (29) is arranged on the first or second component (3, 5),
wherein the interlock receiver (31) can be connected to the interlock element (29) of the locking element (15) by means of the screw connection (33) when the locking element (15) comes into the interlock position, and
wherein the interlock receiver (31) further has a fitting member (40) which is representative of the nominal diameter of the first and second component (3, 5), and the interlock element (29) has a correspondingly shaped fitting member (42) which is representative of the locking element length that is required for the respective nominal diameter of the first and second component (3, 5), wherein the fitting members (40, 42) are each positioned so that they can engage in each other when the locking element (15) is in the interlock position.

2. The plug-in connection system (1) according to claim 1,
wherein the locking element safety device (20) has a retainer (23) which is designed to prevent the locking element (15) from inadvertently leaving the locking element channel completely,
wherein preferably, the locking element safety device (20) has an engagement member (25) corresponding to the retainer (23) and embodied at the end of the locking element (15),
wherein the retainer (23) is preferably arranged on the first or second component (3, 5) and can be moved back and forth between an interlock position and a release position.

3. The plug-in connection system according to claim 2,
wherein when in the locking position, the retainer (23) projects at least so far into the locking element channel (14) that the engagement member (25) of the locking element (15) is prevented from sliding out of the locking element channel (14).

4. The plug-in connection system (1) according to claim 2 or 3,
wherein a channel end section (21) into which the second recess opens is formed in such a way in the second component that the channel end section (21) is part of the locking element channel (14) and is dimensioned for insertion and removal of the locking element (15) into and out of the locking element channel (14),
wherein the retainer (23) is preferably arranged in the region of the channel end section (21) in such a way that the engagement member (25) of the locking element (15) completely reveals at least the first recess (11) when in contact with the retainer (23), and/or
wherein the channel end section (21) is preferably open towards an outer peripheral surface (22) of the second component (5).

5. The plug-in connection system (1) according to any one of the preceding claims,
wherein the interlock element (29) is formed opposite the engagement member (25) of the retainer (23).

6. The plug-in connection system according to any one of the claims 1 to 5,
wherein the interlock receiver (31) and the interlock element (29) are preferably shaped correspondingly to each other, and
the interlock receiver (31) is configured to reversibly and releasably secure the interlock element (29).

7. The plug-in connection system (1) according to any one of the claims 1 to 6,
wherein the locking element interlock mechanism (30) has a spring element (35) which is operatively coupled to the interlock element (29) or to the interlock receiver (31) and which is configured to exert a force, in the interlock position, onto the interlock element (29) or the interlock receiver (31) that is directed away from the first or second component (3, 5).

8. The plug-in connection system (1) according to any one of the preceding claims,
wherein a corresponding positioning element (41, 43) for unique alignment of the components with each other is formed on each of the first and second components (3, 5), wherein preferably a recess (41) is formed on the front side of one of the two components (3), preferably on a ring (4) which can be rotated around the component (3), and a corresponding protrusion (43) is provided on the front side of the other of the two components (3).

9. The plug-in connection system (1) according to claim 8,
wherein the corresponding positioning elements (41, 43) are arranged in such a way that the first and second components (3, 5) are only able to adopt the fully plugged-in state when the positioning elements (41, 43) engage one another.

10. The plug-in connection system (1) according to claim 8 or 9,
wherein one or both of the positioning elements (41, 43) have insertion bevels (44, 45).

11. Use of a plug-in connection system according to any one of the preceding claims to couple two components (3, 5), in particular two fluid-conducting components (3, 5) of a fire extinguishing system.

12. A method of coupling two components (3, 5) of a plug-in connection system according to any one of claims 1 to 10, in particular two fluid-conducting components (3, 5) of a fire extinguishing system, comprising the steps of:
- plugging the first component (3) and the second component (5) into one another in such a way that a locking element channel (14) between the two components (3, 5) is defined by means of recesses (11, 13) arranged opposite one another,
- inserting a locking element (15) into the locking element channel (14) until an interlock position is reached in which at least part of the locking element (15) engages in both recesses (11, 13), and
- reversibly and releasably securing the locking element (15) on the first component (3) and the second component (5), wherein the reversibly releasably securing of the locking element (15) comprises engaging of correspondingly shaped fitting members (40, 42), that are arranged relative to each other in such a way, so that for the nominal diameter of the first and second component (3, 5) a predetermined locking element (15) length has to be inserted in the plug-in connection system (1) so that the fitting members (40, 42) can engage each other.

## Revendications

1. Système de connecteur à enfichage (1) pour des composants conducteurs de fluides de systèmes d'extinction d'incendie, avec
- un premier composant (3) avec une surface périphérique extérieure (7) et un premier évidement (11) dans la surface périphérique (7),
- un deuxième composant (5) avec une surface périphérique intérieure (9) et un deuxième évidement (13) dans la surface périphérique intérieure (9), dans lequel
le premier et le deuxième composant (3, 5) peuvent être enfichés l'un dans l'autre de telle manière qu'à l'état entièrement emboîté les évidements (11, 13) sont disposés l'un en face de l'autre et définissent un canal d'élément de blocage (14), et avec
un élément de blocage (15) qui, à l'état complètement emboîté des composants (3, 5), peut être inséré dans le canal d'élément de blocage (14) jusqu'à l'atteinte d'une position de verrouillage, et vient en prise au moins en partie avec les deux évidements (11, 13) dans la position de verrouillage,
dans lequel le système de connecteur à enfichage présente un dispositif de sécurité d'élément de blocage (20) pour fixer de manière réversible et amovible l'élément de blocage (15) sur le premier et/ou le deuxième composant (3, 5), dans lequel le dispositif de sécurité d'élément de blocage (20) présente un verrouillage d'élément de blocage (30), qui est configuré pour fixer de manière réversible et amovible l'élément de blocage (15) dans la position de verrouillage à l'intérieur du canal d'élément de blocage (14),
**caractérisé en ce que** le verrouillage d'élément de blocage (30) présente un élément de verrouillage (29) réalisé côté extrémité sur l'élément de blocage (15) et une liaison à vis (33),
dans lequel un logement de verrouillage (31) pour l'élément de verrouillage (29) est disposé sur le premier ou le deuxième composant (3, 5),
dans lequel le logement de verrouillage (31) peut être relié à l'élément de verrouillage (29) de l'élément de blocage (15) au moyen de la liaison à vis (33) lorsque l'élément de blocage (15) prend la position de verrouillage, et
dans lequel le logement de verrouillage (31) présente en outre un élément d'ajustement (40), qui est représentatif de la largeur nominale du premier et du deuxième composant (3,5), et l'élément de verrouillage (29) présente un élément d'ajustement (42) réalisé de manière correspondante, qui est représentatif de la longueur d'élément de blocage, qui est nécessaire pour la largeur nominale respective du premier et du deuxième composant (3,5), dans lequel les éléments d'ajustement (40, 42) sont chacun positionnés de telle sorte qu'ils peuvent s'emboîter l'un dans l'autre dans la position de verrouillage de l'élément de blocage (15).

2. Systèame de connecteur à enfichage (1) selon la revendication 1,
dans lequel le dispositif de sécurité d'élément de blocage (20) présente un dispositif de sécurité anti-perte (23), qui est mis au point pour empêcher l'élément de blocage (15) de quitter involontairement complètement le canal d'élément de blocage,
dans lequel le dispositif de sécurité d'élément de blocage (20) présente de préférence un élément de prise (25) réalisé côté extrémité sur l'élément de blocage (15), correspondant au dispositif de sécurité anti-perte (23),
dans lequel le dispositif de sécurité anti-perte (23) est disposé de préférence de manière à pouvoir effectuer des mouvements de va-et-vient entre une position de blocage et une position de libération sur le premier ou le deuxième composant (3, 5).

3. Système de connecteur à enfichage selon la revendication 2,
dans lequel le dispositif de sécurité anti-perte (23), dans la position de blocage, dépasse au moins suffisamment dans le canal d'élément de blocage (14) pour empêcher l'élément de prise (25) de l'élément de blocage (15) de glisser hors du canal d'élément de blocage (14).

4. Système de connecteur à enfichage (1) selon la revendication 2 ou 3,
dans lequel une section d'extrémité de canal (21) est réalisée dans le deuxième composant, dans laquelle débouche le deuxième évidement, de telle sorte que la section d'extrémité de canal (21) fait partie du canal d'élément de blocage (14), et qui est dimensionnée pour l'introduction et l'extraction de l'élément de blocage (15) dans le canal d'élément de blocage (14), dans lequel le dispositif de sécurité anti-perte (23) est de préférence disposé dans la zone de la section d'extrémité de canal (21) de telle manière que l'élément de prise (25) de l'élément de blocage (15), lorsqu'il est en appui avec le dispositif de sécurité anti-perte (23), libère complètement au moins le premier évidement (11), et/ou
dans lequel de préférence la section d'extrémité de canal (21) est ouverte vers une surface périphérique extérieure (22) du deuxième composant (5).

5. Système de connecteur à enfichage (1) selon l'une quelconque des revendications précédentes,
dans lequel l'élément de verrouillage (29) est réalisé en vis-à-vis de l'élément de prise (25) du dispositif de sécurité anti-perte (23) sur l'élément de blocage (15).

6. Système de connecteur à enfichage selon l'une quelconque des revendications 1 à 5,
dans lequel le logement de verrouillage (31) et l'élément de verrouillage (29) sont de préférence formés de manière à correspondre l'un par rapport à l'autre, et
le logement de verrouillage (31) est mis au point pour fixer de manière réversible et amovible l'élément de verrouillage (29).

7. Système de connecteur à enfichage (1) selon l'une quelconque des revendications 1 à 6,
dans lequel le verrouillage d'élément de blocage (30) présente un élément à ressort (35), qui est en liaison fonctionnelle avec l'élément de verrouillage (29) ou le logement de verrouillage (31) et qui est configuré pour exercer, dans la position de verrouillage, une force dirigée à l'écart du premier ou du deuxième composant (3,5) sur l'élément de verrouillage (29) ou le logement de verrouillage (31).

8. Système de connecteur à enfichage (1) selon l'une quelconque des revendications précédentes,
dans lequel un élément de positionnement (41, 43) correspondant est respectivement réalisé sur le premier et le deuxième composant (3, 5) pour un alignement clair des composants l'un par rapport à l'autre, dans lequel un évidement (41) est de préférence réalisé sur l'un des deux composants (3), côté frontal, de préférence sur une bague (4) tournant autour du composant (3), et sur l'autre des deux composants (5) une partie faisant saillie (43) correspondante est prévue côté frontal.

9. Système de connecteur à enfichage (1) selon la revendication 8,
dans lequel les éléments de positionnement (41, 43) correspondants sont disposés de telle manière que le premier et le deuxième composant (3, 5) ne peuvent prendre l'état entièrement emboîté que lorsque les éléments de positionnement (41, 43) sont mutuellement emboîtés .

10. Système de connecteur à enfichage (1) selon l'une quelconque des revendications 8 ou 9,
dans lequel un ou les deux des éléments de positionnement (41, 43) présentent des biseaux d'introduction (44, 45).

11. Utilisation d'un système de connecteur à enfichage selon l'une quelconque des revendications précédentes, pour coupler deux composants (3, 5), en particulier deux composants (3,5) conducteurs de fluide d'un système d'extinction d'incendie.

12. Procédé de couplage de deux composants (3,5) d'un système de connecteur à enfichage (1) selon l'une quelconque des revendications 1 à 10, en particulier de deux composants (3,5) conducteurs de fluide d'un système d'extinction d'incendie, comprenant les étapes :
- d'emboîtement du premier composant (3) et du deuxième composant (5) de telle manière que, au moyen d'évidements (11, 13) disposés l'un en face de l'autre, un canal d'élément de blocage (14) est défini entre les deux composants (3, 5),
- l'insertion d'un élément de blocage (15) dans le canal d'élément de blocage (14) jusqu'à l'atteinte d'une position de verrouillage, dans laquelle l'élément de blocage (15) vient en prise au moins en partie avec les deux évidements (11, 13), et
- la fixation réversible et amovible de l'élément de blocage (15) sur le premier composant (3) et le deuxième composant (5), dans lequel la fixation amovible de l'élément de blocage (15) comprend l'emboîtement d'éléments d'ajustement (40, 42) réalisés de manière correspondante, qui sont disposés de manière relative l'un par rapport à l'autre de telle manière qu'une longueur prédéterminée de l'élément de blocage (15) doit être insérée dans le système de connecteur à enfichage (1) pour la largeur nominale respective du premier et du deuxième composant (3, 5) afin de pouvoir amener mutuellement en prise les éléments d'ajustement (40, 42) .
